# EUROPEAN PATENT APPLICATION

(11) **EP 4 458 996 A1**
(43) Date of publication of application: **06.11.2024**
(21) Application number: 22915260.8
(22) Date of filing: 23.12.2022
(51) Int. Cl.: C22B 7/00, C22B 23/00, C22B 26/12, H01M 10/54, H01M 10/0525, H01M 4/131, C22B 5/10, C22B 3/22

(54) **METHOD FOR OBTAINING LI, NI AND CO FROM DISCARDED LITHIUM ION BATTERIES**

(30) Priority: 31.12.2021 ES 202131237
(71) Applicant: Consejo Superior De Investigaciones Científicas (CSIC), 28006 Madrid (ES)
(72) Inventor: LÓPEZ GÓMEZ, Félix Antonio, 28040 Madrid (ES); ALGUACIL PRIEGO, Francisco José, 28040 Madrid (ES); ALCARAZ ROMO, Lorena, 28040 Madrid (ES); RODRÍGUEZ LARGO, Olga, 28040 Madrid (ES)
(74) Representative: Pons
(86) International application number: PCT/ES2022/070833
(87) International publication number: WO 2023/126557

(57) **Abstract**

The present invention relates to a method for obtaining lithium (Li), nickel (Ni) and cobalt (Co) from discarded lithium ion batteries, which comprises a step of carbothermic reduction and a step of magnetic separation. The invention is therefore of interest to producers of lithium ion batteries, specifically to process the waste generated by said batteries and to obtain valuable metals.

## Description

The present invention relates to a method for obtaining lithium Li, nickel Ni and cobalt Co from discarded lithium ion batteries, which comprises a step of carbothermic reduction and a step of magnetic separation.

The present invention is therefore of interest to producers of lithium ion batteries, specifically to process the waste generated by said batteries and to obtain valuable metals.

### BACKGROUND OF THE INVENTION

Batteries power many electronic devices, such as mobile phones, laptops and digital cameras, as well as electric and hybrid cars. However, every year, tons of spent or discarded batteries are generated, posing a threat to people's health and the environment.

lithium ion batteries pose a special threat, since they contain a high percentage of dangerous heavy metals, therefore, the recovery of said metals is key to preserving natural resources and the environment.

The chemistry used to extract the different metals from discarded lithium ion batteries fundamentally depends on the composition of the cathodes and anodes of said lithium ion batteries. Methods for recovering valuable metals from discarded lithium ion batteries can be found in the literature (Pengcheng Liu et al. Journal of Thermal Analysis and Calorimetry Volume 136, pages 1323-1332 (2019*),* CN111996377A, CN112079369A and CN104611566B), however, the purity of the metals obtained and the yield of said methods are low.

Therefore, it is necessary to develop new methods to obtain high performance in the recovery of valuable metals from the different types of lithium ion batteries that result in high purity valuable metals, in other words, with sufficient quality to be reused, for example, in the production of new batteries.

### DESCRIPTION OF THE INVENTION

The present invention relates to a method for obtaining valuable metals from discarded lithium ion batteries which comprises a step of carbothermic reduction and a step of magnetic separation. The main advantage of the method of the present invention is the production of the metals nickel Ni, cobalt Co and lithium Li with a purity greater than 98% and resulting in a metal production of up to 98% for nickel Ni, up to 92% for cobalt Co and greater than 99% for lithium Li.

In a first aspect, the present invention relates to a method for obtaining lithium Li, nickel Ni and cobalt Co from discarded lithium ion batteries, characterised in that it comprises the following steps:
a) dismantling a discarded lithium ion battery by separating the anode and cathode mixture from the aluminium Al casing and copper Cu connectors, and crushing the anode and cathode mixture to obtain a first black mass;
b) washing the first black mass obtained in step (a) with water to eliminate the electrolyte, and drying to obtain a second black mass;
c) reducing the second black mass obtained in step (b) with a reducing agent selected from coke and carbon black, wherein said reduction is carried out at a temperature of between 650 °C and 750 °C for a period of time between 1 h and 2 h and under an inert atmosphere;
d) washing the cold product obtained in step (c) with water to obtain
   - a water-insoluble magnetic solid comprising graphite, nickel Ni and cobalt Co, and
   - an aqueous solution comprising lithium Li;
e) removing water from the aqueous solution obtained in step (d) by evaporation in a rotary evaporator at a temperature of between 40 °C and 50 °C and a pressure of between 4666.28 Pa and 5999.51 Pa to obtain carbonate lithium LiCO₃; and f) removing graphite and other non-magnetic impurities from the insoluble magnetic solid obtained in step (e) by magnetic separation to obtain a magnetic mixture of nickel Ni and cobalt Co.

Step (a) of the method relates to the production of a first black mass from a discarded lithium ion battery.

In step (a) of the method of the present invention:
- a discarded lithium ion battery is dismantled by separating the anode and cathode mixture from the aluminium Al casing and the copper Cu connectors and
- the anode and cathode mixture is crushed,
to obtain a first black mass comprising lithium Li, cobalt Co, nickel Ni and graphite.

Preferably the active material of the cathode of the discarded lithium ion battery is selected from LiCoO₂, LiFePO₄ and LiNiₓCo_{y}Al_{1-x-y}O₂, in other words, discarded lithium ion batteries the cathode of which does not comprise manganese Mn.

Step (b) of the method relates to washing the first black mass obtained in step (a) with water to remove the electrolyte and drying, to obtain a second black mass. Preferably the proportion of first black mass in step (b) ranges between 10 g and 30 g per litre of water.

In step (c) the second black mass obtained in step (b) is reduced with a reducing agent selected from coke and carbon black, wherein said reduction is carried out at a temperature of between 650 °C and 750 °C for a period of time between 1 h and 2 h under an inert atmosphere and where the proportion of the reducing agent ranges between 50 g and 250 g for each kg of second black mass.

Under these conditions, two phases are formed, one magnetic and the other non-magnetic, wherein the valuable metals of interest are found in the magnetic phase.

In the present invention, step (c) is carried out under "inert atmosphere", in other words, in the presence of a stream of nitrogen or argon.

In step (d) of the method of the present invention, the cold product obtained in step (c) is washed with water to obtain
- a water-insoluble magnetic solid comprising graphite, nickel Ni and cobalt Co,
- and an aqueous solution comprising lithium Li.

Preferably the proportion of water in step (d) ranges between 10 litres and 50 litres for each kg of cold product obtained in step (c).

In step (e) the water is removed from the aqueous solution obtained in step (d) by evaporation in a rotary evaporator, preferably at a temperature of between 40 °C and 50 °C and a pressure of between 35 mmHg (4666.28 Pa) and 45 mmHg (5999.51 Pa) to obtain lithium carbonate Li₂CO₃.

In the last step of the method, step (f), graphite and other non-magnetic impurities are removed from the insoluble magnetic solid obtained in step (e) by magnetic separation, to obtain a magnetic mixture of nickel Ni and cobalt Co.

This step (f) of magnetic separation is an advantage since only the magnetic compounds or phases such as the mixture of nickel Ni and cobalt Co are separated from graphite and other non-magnetic impurities such as manganese Mn (antiferromagnetic) effectively, resulting in high purities (greater than 98%) and high yields (up to 98% for nickel Ni, up to 92% for cobalt Co and greater than 99% for lithium Li.).

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

**Figure 1****.** Diagram of the method followed for recovering metals.
**Figure 2****.** X-ray diffraction profile of the solid residue obtained after removing the washing water from the residue.
**Figure 3****.** SEM image of the solid obtained after removing the washing water from the residue.
**Figure 4****.** Diffraction profile of the resulting insoluble product after aqueous leaching.
**Figure 5****.** SEM image of the resulting insoluble product after aqueous leaching.
**Figure 6****.** Hysteresis cycle at room temperature of the metal mixture obtained from MN-1.
**Figure 7****.** X-ray diffraction profile of the solid residue obtained after removing the washing water from the residue.
**Figure 8****.** SEM image of the solid obtained after removing the washing water from the residue.
**Figure 9****.** Diffraction profile of the resulting insoluble product after aqueous leaching.
**Figure 10****.** Hysteresis cycle at room temperature of the metal mixture obtained from MN-1.

### EXAMPLES

The recovery of metals in lithium ion batteries has been studied through a carbothermic reduction process using different black starting masses.

The carbothermic reduction reaction was carried out in a homogeneous mixture of black mass of different origin and composition, and carbon black or coke as reducing agents, using different proportions of these under an inert atmosphere (nitrogen or argon stream)

The temperature of the carbothermic reduction process was between 650 °C and 750 °C for a period of time between 1 h and 2 h, wherein the proportion of the reducing agent ranges between 50 g and 250 g for each kg of black mass. The process was carried out in a horizontal tubular oven with temperature and reaction time control.

The cold product obtained in the step of carbothermic reduction is leached with water where the proportion of water ranges between 10-50 litres for each kg of product. The final mixture is filtered to separate the liquid phase from the insoluble solid.

After leaching, water is removed from the solution obtained to obtain lithium carbonate. The process was carried out by evaporation in a rotary evaporator at 40 °C and 35 mmHg of negative pressure (4666.28 Pa).

The water-insoluble residue obtained is dried in an oven at a temperature of 80 °C for 12 hours.

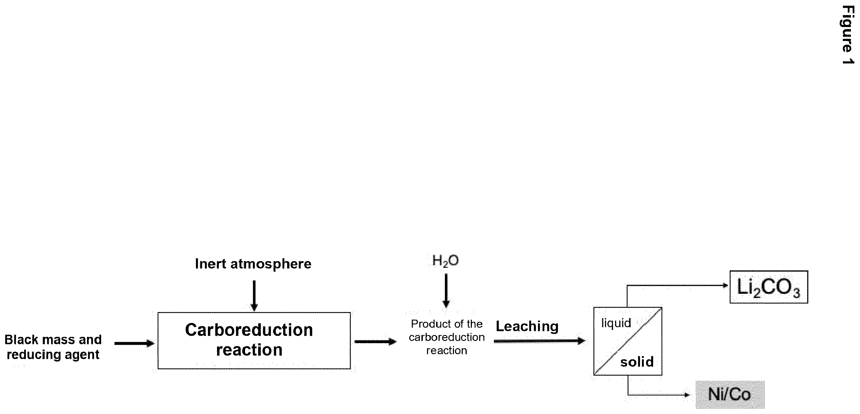

Figure 1 presents a diagram of the method carried out for recovering metals.

Next, the results obtained in the treatment of two black starting masses obtained from different lithium ion batteries with different compositions are described.

### Example 1

The composition of the starting black mass is presented in Table 1.

**Table 1. Elementary composition of the initial black mass (MN-1):**

| Element | % by weight |
|---|---|
| Ni | 34 |
| Co | 5 |
| Mn | 0 |
| Cu | 2 |
| Li | 4 |
| C* | 33 |

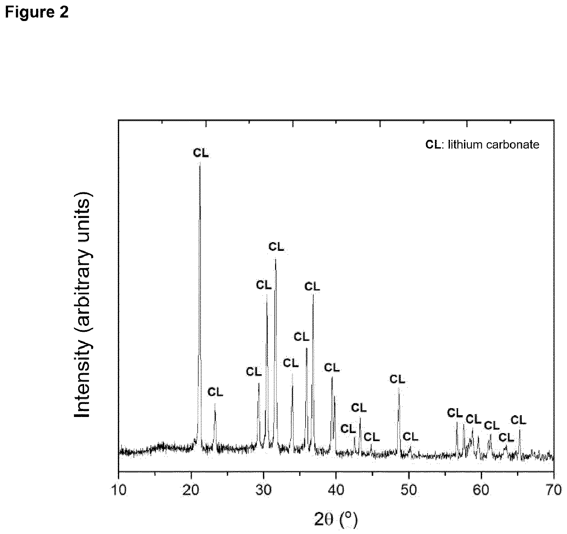

Figure 2 shows an X-ray diffraction pattern for the final product obtained after the carbothermic reduction and aqueous leaching process. All diffraction maxima can be indexed to a Li₂CO₃ phase (JCPDS 83-1454), demonstrating the purity of the product obtained.

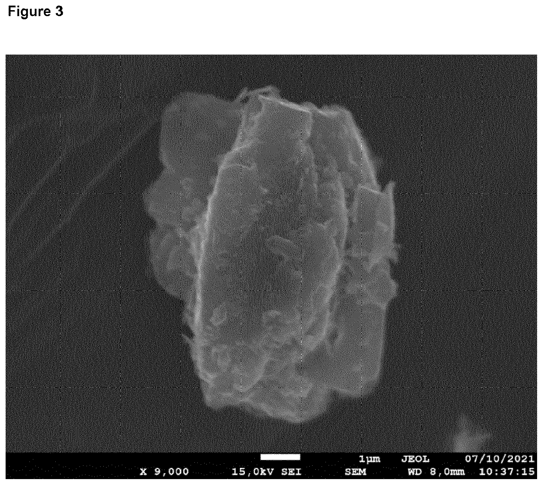

Figure 3 shows the micrograph obtained by means of scanning electron microscopy for the Li₂CO₃ sample, where agglomerates of particles with an approximately rounded morphology are observed. Therefore, the lithium from the black mass was recovered and separated as Li₂CO₃ using carbothermic reduction, and the subsequent leaching with water of the materials obtained after the carbothermic reduction.

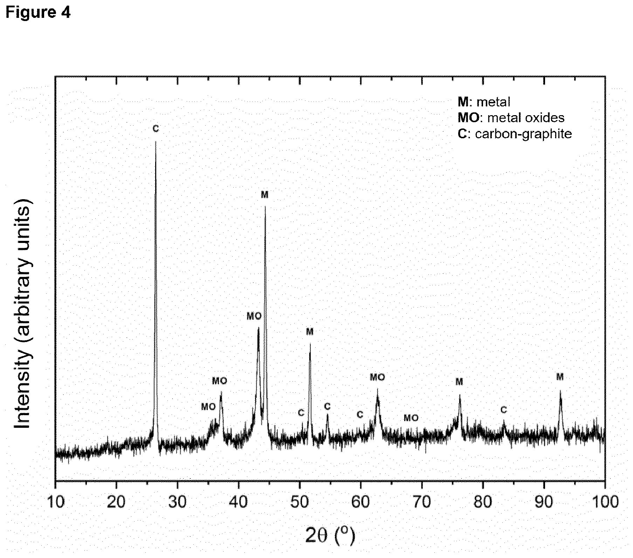

Figure 4 shows the X-ray diffraction pattern of the resulting insoluble product after aqueous leaching. Several reflections attributable to carbon-graphite, metals (in their elementary form, Ni (JCPDS 89-7128) and Co (JCPDS 89-4307) and metal oxides of nickel (NiO (JCPDS 78-423)) and cobalt (CoO (JCPDS 78-431)) were recorded. No diffraction maxima related to the initial phase were detected.

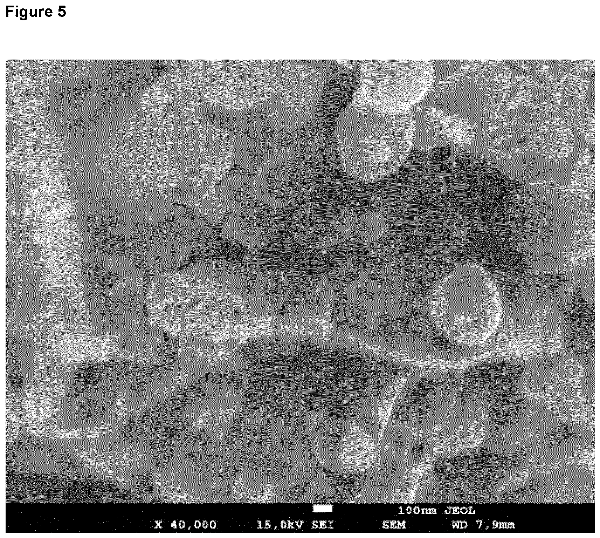

The scanning electron microscopy (SEM) image of the metal mixture obtained is shown in Figure 5. Spherical particles can be observed, which can be attributed to the carbon-graphite phase. Furthermore, particles with non-regular morphology can also be seen, which corresponds to the mixture of metals.

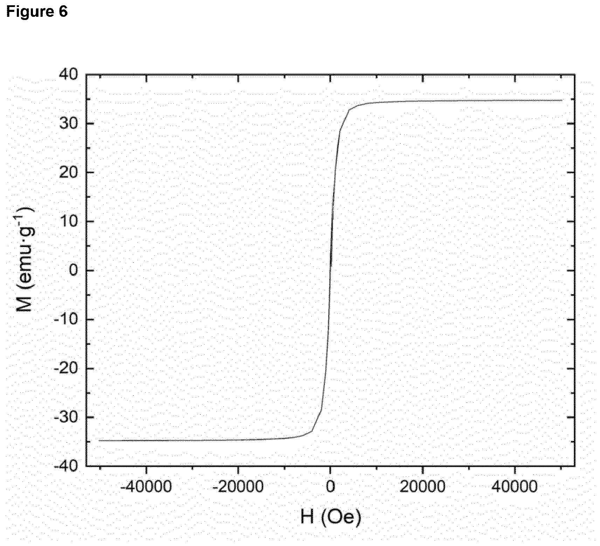

The magnetic character of the solid obtained was analysed by means of the corresponding measurements of the magnetisation of the material against the applied magnetic field. Figure 6 shows the hysteresis loop obtained for the metal mixture. The magnetisation curve is S-shaped, corresponding to a soft ferromagnetic material. The magnetisation at saturation for the metal mixture from the black mass 1 studied (MN-1_RI) is 36.2 emu/g, demonstrating the strong magnetic character of the solid.

Table 2 summarises the recoveries of the different metals expressed in %.

**Table 2. Metal recovery percentages:**

| Recovered metal | % recovery |
|---|---|
| Ni | 98 |
| Co | 74 |
| Li | >99 |

### Example 2

The composition of the starting black mass is presented in Table 3.

**Table 3. Elementary composition of the initial black mass (MN-2):**

| Element | % by weight |
|---|---|
| Ni | 27 |
| Co | 4 |
| Mn | 0 |
| Cu | 1 |
| Li | 5 |

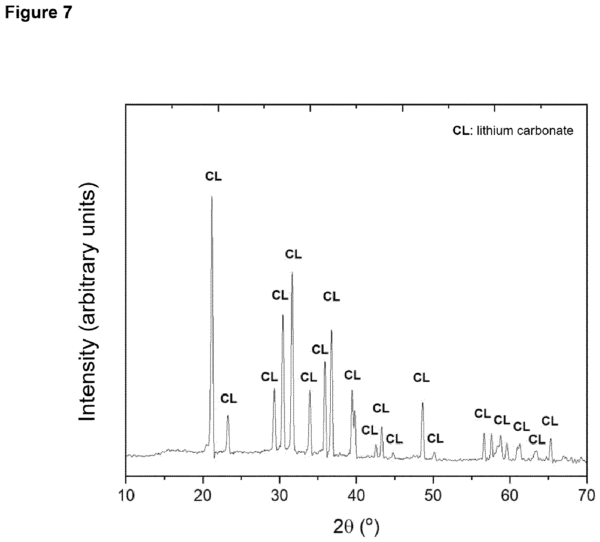

Figure 7 shows an X-ray diffraction pattern for the final product obtained. It can be seen that all the diffraction maxima can be indexed to a Li₂CO₃ phase (JCPDS 83-1454), demonstrating the purity of the product obtained.

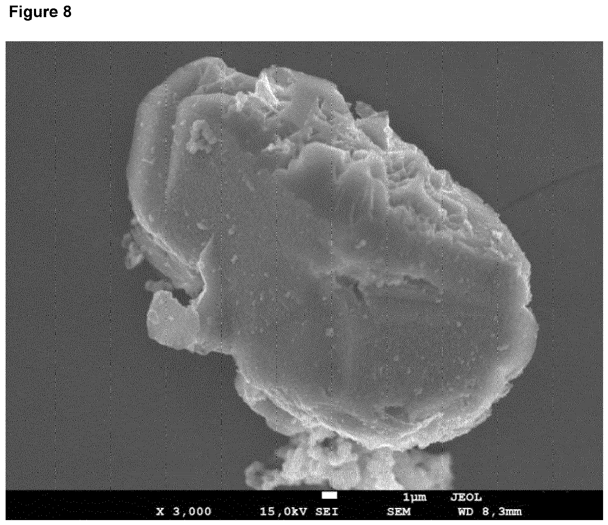

Figure 8 shows the micrograph obtained by means of scanning electron microscopy for the Li₂CO₃ sample, where agglomerates of particles with an approximately rounded morphology are observed. Therefore, the lithium from the black masses was recovered and separated as Li₂CO₃ using carbothermic reduction, and subsequent water leaching of the roasting materials.

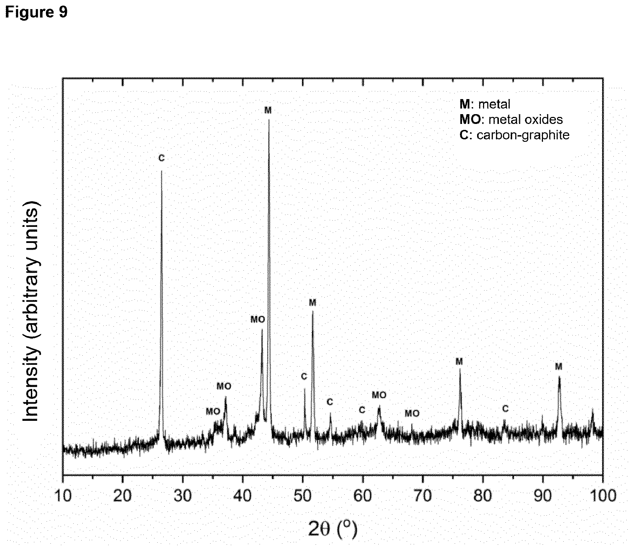

Figure 9 shows the X-ray diffraction pattern for the solid resulting from aqueous leaching. Several reflections attributable to carbon-graphite, metals (in their elementary form, Ni (JCPDS 89-7128) and Co (JCPDS 89-4307) and metal oxides of nickel (NiO (JCPDS 78-423)) and cobalt (CoO (JCPDS 78-431)) were recorded. No diffraction maxima related to the initial phase were detected.

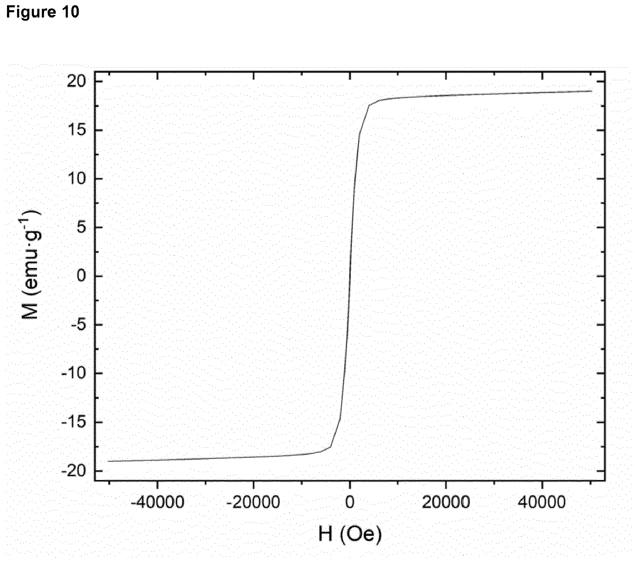

The magnetic character of the solid obtained was analysed by means of the corresponding measurements of the magnetisation of the material against the applied magnetic field. Figure 10 shows the hysteresis loop obtained for the metal mixture. The magnetisation curve is S-shaped, corresponding to a soft ferromagnetic material. The magnetisation at saturation for the metal mixture from the black mass 2 studied (MN-2_RI) is 18.7 emu/g, demonstrating the strong magnetic character of the solid.

Table 4 summarises the recoveries of the different metals expressed in %.

**Table 4. Metal recovery percentages:**

| Recovered metal | % recovery |
|---|---|
| Ni | 98 |
| Co | 92 |
| Li | >99 |

## Claims

1. A method for obtaining lithium Li, nickel Ni and cobalt Co from discarded lithium ion batteries **characterised in that** it comprises the following steps:
a) dismantling a discarded lithium ion battery by separating the anode and cathode mixture from the aluminium Al casing and copper Cu connectors, and crushing the anode and cathode mixture to obtain a first black mass comprising nickel Ni, cobalt Co, lithium Li and graphite;
b) washing the first black mass obtained in step (a) with water to eliminate the electrolyte, and drying, to obtain a second black mass;
c) reducing the second black mass obtained in step (b) with a reducing agent selected from coke and carbon black, wherein said reduction is carried out at a temperature of between 650 °C and 750 °C for a period of time between 1 h and 2 h and under an inert atmosphere;
d) washing the cold product obtained in step (c) with water to obtain
• a water-insoluble magnetic solid comprising graphite, nickel Ni and cobalt Co, and
• an aqueous solution comprising Li;
e) removing water from the aqueous solution obtained in step (d) by evaporation in a rotary evaporator at a temperature of between 40 °C and 50 °C and a pressure of between 4666.28 Pa and 5999.51 Pa to obtain carbonate lithium LiCO₃; and f) removing graphite and other non-magnetic impurities from the insoluble magnetic solid obtained in step (e) by magnetic separation to obtain a magnetic mixture of nickel Ni and cobalt Co.

2. The method according to claim 1, wherein the cathode of the lithium ion battery comprises an active material selected from LiCoO₂, LiFePO₄ and LiNiₓCo_{y}Al_{1-x-y}O₂.

3. The method according to any of claims 1 or 2, wherein the proportion of first black mass in step (b) ranges between 10 g and 30 g per litre of water.

4. The method according to any of claims 1 to 3, wherein the proportion of the reducing agent in step (c) ranges between 50 g and 250 g for each kg of second black mass.

5. The method according to any of claims 1 to 4, wherein the proportion of water in step (d) ranges between 10 litres and 50 litres for each kg of cold product obtained in step (c).
